# FASCICULE DE BREVET EUROPEEN

(11) **EP 2 976 522 B1**
(45) Date de publication et mention de la délivrance du brevet: **16.05.2018**
(21) Numéro de dépôt: 13717966.9
(22) Date de dépôt: 19.03.2013
(51) Int. Cl.: F03B 11/00, F03B 3/02

(54) **TURBINE HYDRAULIQUE ET INSTALLATION DE CONVERSION D'ENERGIE COMPRENANT UNE TELLE TURBINE**
HYDRAULISCHE TURBINE UND STROMWANDLERANLAGE MIT DIESER TURBINE
HYDRAULIC TURBINE, AND POWER CONVERSION FACILITY INCLUDING SUCH A TURBINE

(43) Date de publication de la demande: 27.01.2016
(73) Titulaire: GE Renewable Technologies, 38100 Grenoble (FR)
(72) Inventeur: SABOURIN, Michel, Sorel-Tracy, Québec J3R 2R4 (CA); BORNARD, Laurent, Saint-Ours, Québec J0G IP0 (CA); BEAULIEU, Sébastien, Verchères, Québec J0L 2R0 (CA)
(74) Mandataire: Brannen, Joseph Waclaw
(86) Numéro de dépôt international: PCT/FR2013/050587
(87) Numéro de publication internationale: WO 2014/147300

(56) Documents cités:
- EP-A1- 0 571 690
- GB-A- 750 862
- GB-A- 850 112
- US-A- 3 237 565
- US-A- 4 898 512

## Description

L'invention a trait à une turbine hydraulique ainsi qu'à une installation de conversion d'énergie comprenant une telle turbine.

Dans le domaine de la conversion d'énergie hydraulique en énergie électrique ou mécanique, il est connu d'utiliser une turbine, par exemple une turbine Francis, pour entraîner en rotation un arbre portant une roue de la turbine, cet arbre étant relié à un alternateur. Une telle turbine est intégrée à une installation qui comprend, entre autres, une retenue d'eau, laquelle est reliée à une bâche d'alimentation de la turbine au moyen d'une conduite forcée.

Dans certaines installations, notamment celles utilisées dans des climats relativement chauds, et à la fin de l'été, il arrive que l'eau provenant de la retenue d'eau à travers la conduite forcée soit appauvrie en oxygène dissout, ce qui provient du fait que cette eau est prélevée à une profondeur relativement importante de la retenue d'eau où la teneur en oxygène ne permet pas d'assurer une vie aquatique. Dans ce cas, pour permettre le développement d'une vie aquatique en aval de l'installation, l'eau qui transite à travers la turbine doit être enrichie en oxygène.

Pour ce faire, il est connu de mettre en oeuvre, sur le trajet d'écoulement d'un flux d'eau traversant la roue de la turbine, des moyens d'oxygénation de ce flux d'eau, comme cela ressort de l'article « Methods for air admission in hydroturbines », de B.Papillon, M.Couston, C.Deschenes, M.Sabourin, publié dans Proceedings of the Hydraulic Machinery and systems 21st AIHR Symposium (September 9-12, 2002, Lausanne*).* De tels systèmes perturbent ce flux d'eau, ce qui diminue le rendement de l'installation tout au long de l'année, alors que le problème lié à l'alimentation de la turbine avec une eau appauvrie en air ne se pose que dans certaines circonstances.

Il est par ailleurs connu de US-A-3 237 565 d'injecter un mélange air-eau en amont d'une pompe ou d'une turbine pompe fonctionnant en mode pompe. Ceci vise à faire varier la densité du mélange à l'amorçage mais ne permet pas d'utiliser une eau pauvre en oxygène dans une turbine.

C'est à ces inconvénients qu'entend plus particulièrement répondre l'invention en proposant une nouvelle turbine hydraulique capable de fonctionner avec une eau à faible teneur en oxygène dissout et dont le rendement n'est pas sensiblement diminué du fait des mesures prises pour augmenter la teneur en oxygène dissout de l'eau, lorsque cela est nécessaire.

A cet effet, l'invention concerne une turbine hydraulique selon la revendication 1. Grâce à l'invention, les premiers moyens, qui sont disposés à l'extérieur du trajet d'écoulement du flux d'eau principal, ne perturbent pas ce flux d'eau principal qui peut donc être utilisé dans des conditions optimales pour entraîner en rotation la roue de la turbine. Lorsqu'il est nécessaire d'augmenter la teneur en oxygène de l'eau sortant de la turbine, les premiers moyens peuvent être mis en oeuvre en prélevant le flux d'eau secondaire sur le trajet d'écoulement, par exemple dans la conduite forcée. Lorsque cela n'est pas nécessaire, notamment en fonction des conditions climatiques, le prélèvement du flux d'eau secondaire n'a pas lieu et les premiers et seconds moyens de l'invention n'ont pas d'influence sur le rendement de l'installation comprenant la turbine hydraulique de l'invention.

Selon des aspects avantageux mais non obligatoires de l'invention, une telle turbine peut incorporer une ou plusieurs des caractéristiques suivantes prises dans toute combinaison techniquement admissible :
- Les premiers moyens comprennent une boîte de mélange alimentée, d'une part en eau, par un premier conduit raccordé au trajet d'écoulement et, d'autre part en gaz , par un deuxième conduit alimenté en gaz contenant de l'oxygène.
- La boîte de mélange comprend un hydro-injecteur à effet Venturi, un système excité par un élément piézo-électrique, un système à vortex cavitaire, un tamis poreux ou une combinaison de ces moyens.
- Les premiers moyens sont prévus pour mélanger le flux d'eau secondaire avec de l'air. Dans ce cas, le deuxième conduit peut être raccordé à l'air libre.
- En variante, le deuxième conduit est raccordé à un réservoir de gaz contenant de l'oxygène, de préférence sous pression.
- La turbine comprend des moyens de contrôle du débit du flux d'eau secondaire, entre le trajet d'écoulement et les premiers moyens.
- Les moyens de contrôle du débit du flux d'eau secondaire comprennent au moins une première vanne disposée sur le premier conduit.
- La turbine comprend des moyens de contrôle du débit de gaz alimentant les premiers moyens.
- Les moyens de contrôle du débit de gaz comprennent au moins une deuxième vanne disposée sur le deuxième conduit.
- Les moyens de contrôle du débit du flux d'eau secondaire et/ou les moyens de contrôle du débit de gaz comprennent une unité de commande de la première vanne et/ou de la deuxième vanne
- Lorsque l'injecteur comprend plusieurs buses, ces buses sont de préférence régulièrement réparties autour de l'axe central du tube d'aspiration.
- Lorsque l'injecteur comprend plusieurs buses, le distributeur comprend avantageusement une chambre de répartition entre les buses du mélange eau-air provenant des premiers moyens, cette chambre étant disposée radialement autour des buses.
- Le distributeur comprend un déflecteur disposé dans le tube d'aspiration, en aval des buses.
- Le flux d'eau secondaire est prélevé dans la conduite forcée. En variante, il est prélevé dans une bâche de répartition du flux d'eau principal ou dans une retenue d'eau qui alimente la turbine.

La turbine de l'invention peut être une turbine Francis ou une turbine de type hélice, bulbe ou Kaplan.

L'invention concerne également une installation de conversion d'énergie hydraulique en énergie électrique ou mécanique qui comprend une turbine, telle que mentionnée ci-dessus, ainsi qu'une conduite forcée d'alimentation de cette turbine avec un flux d'eau principal et un tube d'aspiration prévu pour évacuer le flux d'eau principal sortant de la turbine, alors que les premiers moyens sont sélectivement alimentés avec un flux d'eau secondaire prélevé sur le trajet d'écoulement, en amont de la roue de la turbine, et avec un flux de gaz contenant de l'oxygène à la pression atmosphérique.

L'invention sera mieux comprise et d'autres avantages de celle-ci apparaîtront plus clairement à la lumière de la description qui va suivre de deux modes de réalisation d'une turbine et d'une installation conformes à son principe, donnée uniquement à titre d'exemple et faite en référence aux dessins annexés dans lesquels :
- la figure 1 est une représentation schématique de principe, en section axiale, d'une installation conforme à l'invention

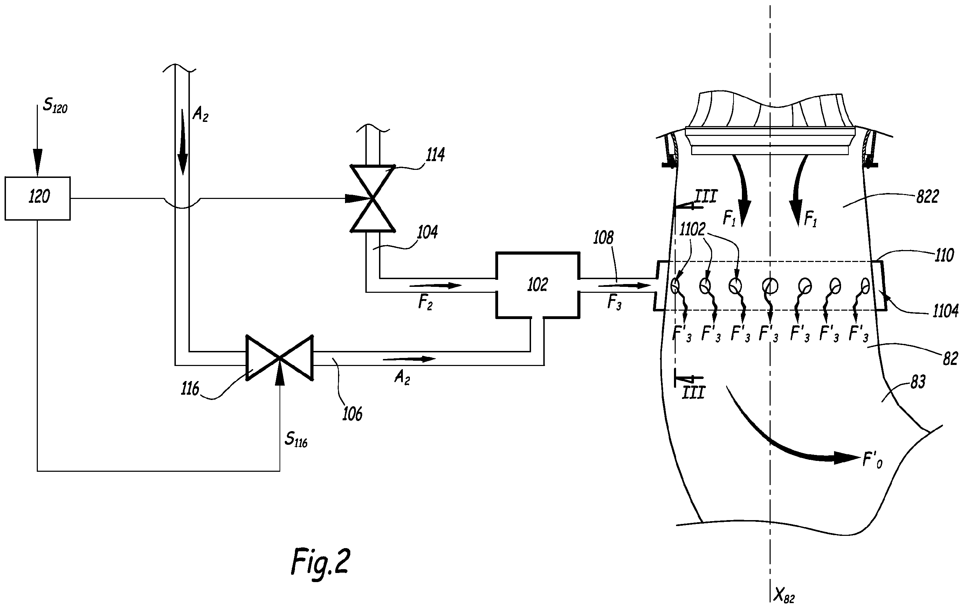

- la figure 2 est une vue à plus grande échelle du détail II à la figure 1 et
- la figure 3 est une coupe de détail correspondant au plan III-III à la figure 2, pour un deuxième mode de réalisation de l'invention.

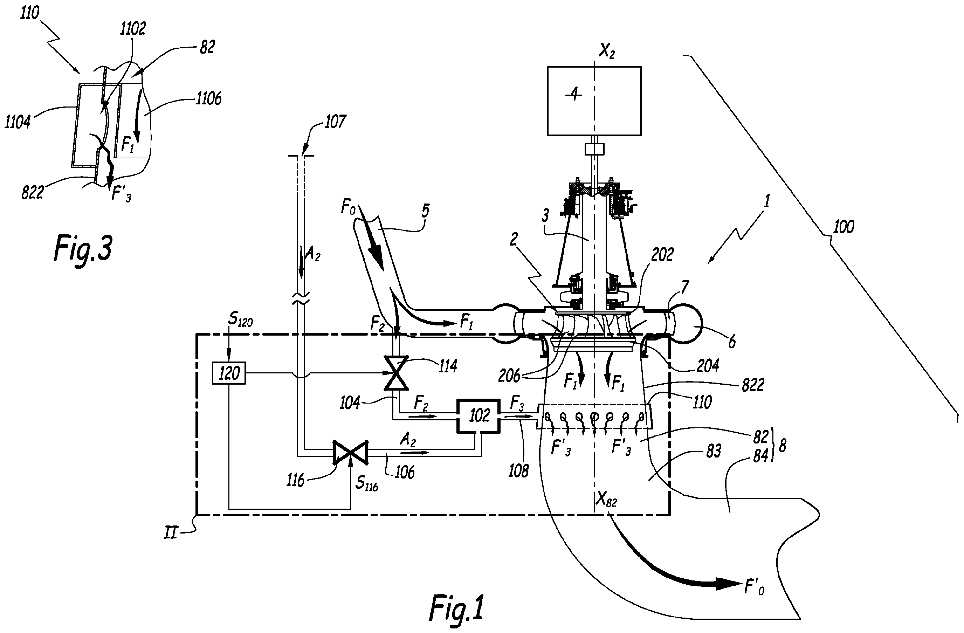

L'installation 100 représentée à la figure 1 comprend une turbine 1 de type Francis dont la roue 2 est destinée à être mise en rotation autour d'un axe vertical X₂ au moyen d'un flux d'eau principal représenté par les flèches F₁. Ce flux d'eau principal F₁ provient d'une retenue d'eau non représentée. A la figure 1, pour la clarté du dessin, la roue 2 est représentée en vue extérieure. Un arbre 3 supporte la roue 2 et est couplé à un alternateur 4 qui délivre un courant alternatif à un réseau électrique non représenté. L'installation 100 permet donc de convertir l'énergie hydraulique du flux d'eau principal F₁ en énergie électrique.

L'installation 100 peut comprendre plusieurs turbines 1 alimentées partir de la même retenue d'eau.

En variante, l'arbre 3 peut être couplé à un ensemble mécanique, auquel cas l'installation 100 convertit l'énergie hydraulique du flux d'eau principal F₁ en énergie mécanique.

Une conduite forcée 5 permet d'amener le flux d'eau principal F₁ à la roue 2 et s'étend entre la retenue d'eau et une bâche 6 de répartition du flux F₁ équipée de directrices 7 qui oriente le flux d'eau principal F₁. Un conduit d'aspiration 8 est prévu en aval de la turbine 1, dans le sens du flux d'eau principal F₁, pour évacuer ce flux d'eau et le renvoyer vers le lit d'une rivière ou d'un fleuve, ou vers un réservoir aval lorsque la turbine 1 est une turbine-pompe.

Le conduit 8 comprend un premier tronçon 82 qui est de forme globalement tronconique, centré sur un axe X₈₂ confondu avec l'axe X₂ et divergeant vers le bas. Le conduit 8 comprend également un deuxième tronçon 83 en forme de coude à environ 90° et un troisième tronçon 84 globalement horizontal. En sortant de la roue 2, l'eau sortant de la turbine 1 parcourt successivement les tronçons 82, 83 et 84 du conduit 8.

La roue 2 comprend un plafond 202, une ceinture 204 et plusieurs aubes 206 réparties autour de l'axe X₂ qui est un axe de symétrie pour le plafond 202 et la ceinture 204. Les aubes 206 définissent, entre elles et entre le plafond 202 et la ceinture 204, des conduits de circulation du flux d'eau principal F₁ à l'intérieur de la roue 2, entre la bâche 6 et le conduit d'aspiration 8.

La conduite 5, la bâche 6, les directrices 7, la roue 2 et le conduit 8 définissent ensemble un trajet d'écoulement pour le flux d'eau principal F₁.

Pour tenir compte du cas où la teneur en oxygène dissout de l'eau fournie à la roue 2 est faible, notamment lorsque cette eau est prélevée à une profondeur importante dans la retenue d'eau, en fin d'été et lorsque l'installation 100 est utilisée sous un climat relativement chaud, une boîte de mélange 102 est prévue au voisinage du tronçon 82 du conduit d'aspiration 8. Cette boîte de mélange 102 est alimentée en eau, à partir de la conduite forcée 5, au moyen d'un premier conduit 104 qui relie la conduite forcée 5 à la boîte de mélange 102. La boîte de mélange 102 est également alimentée en air au moyen d'un deuxième conduit 106 dont l'embouchure 107 est en communication avec l'atmosphère. Ainsi, le deuxième conduit 106 permet d'alimenter la boîte de mélange 102 en air à la pression atmosphérique. La boîte de mélange 102 comprend des chicanes non représentées, placées sur le trajet d'écoulement de l'eau à l'intérieur de cette boîte, ainsi que des orifices, répartis à l'intérieur de cette boîte, pour la sortie de l'air provenant du deuxième conduit 106. Ainsi, un mélange diphasique d'eau et d'air est créé dans la boîte 102.

La structure de la boite de mélange 102 dépend d'un choix de conception. Elle comprend un hydro-injecteur à effet Venturi. En variante, la boite de mélange 102 comprend un système excité avec un élément piezo-électrique, un système à vortex cavitaire ou un tamis poreux ou une combinaison de ces différents moyens. D'autres types de boite de mélange sont envisageables.

Une première vanne 114 est montée sur le conduit 104, alors qu'une deuxième vanne 116 est montée sur le conduit 106. Les vannes 114 et 116 sont des électrovannes contrôlées par une unité électronique 120 au moyen de deux signaux électroniques S₁₁₄ et S₁₁₆. Elles permettent de bloquer ou d'autoriser sélectivement la circulation d'eau et d'air, respectivement dans les conduits 104 et 106. L'unité 120 est ainsi en mesure, en fonction d'un signal électronique S₁₂₀ reçu d'un moyen de mesure extérieur ou d'un opérateur, de piloter les vannes 114 et 116 pour permettre ou non l'alimentation de la boîte de mélange 102, respectivement en eau à partir de la conduite forcée 5 et en air à partir de l'atmosphère ambiante.

Les vannes 114 et 116 peuvent être des vannes « tout ou rien ». Dans ce cas, elles permettent de contrôler les valeurs des débits d'eau du flux F₂ et d'air A₂ entre une valeur nulle et une valeur maximale. En variante, ces vannes sont des vannes proportionnelles, ce qui permet d'ajuster ces débits, notamment en fonction du débit d'eau dans la conduite forcée 5 ou de la pression atmosphérique Lorsque la première vanne 114 est ouverte, un flux d'eau secondaire F₂ s'écoule, à partir de la conduite forcée 5 et à travers le conduit 104, jusque dans la boîte de mélange 102. Lorsque la deuxième vanne 116 est ouverte, de l'air s'écoule dans le conduit 106 jusque dans la boîte de mélange 102, comme représenté par les flèches A₂. Le flux d'eau secondaire F₂ et le flux d'air A₂ se combinent alors dans la boîte de mélange 102 et s'écoulent, à partir de cette boîte, sous la forme d'un flux F₃ de mélange diphasique d'eau et d'air jusque dans le distributeur 110 d'où ce flux ressort dans le tronçon 82 sous la forme de flux unitaires F'₃ de mélange eau-air. Ces flux unitaires F'₃ débouchent dans le conduit d'aspiration 8 à travers des buses 1102 appartenant au distributeur 110 et réparties sur la périphérie du tronçon 82, autour de l'axe X₈₂. Le distributeur 110 comprend une chambre de répartition 1104 qui s'étend au moins en partie autour du tronçon 82 et qui permet de répartir régulièrement le flux de mélange F₃ qui se divise en plusieurs flux F'₃ sur les différentes buses 1102. Les buses 1102 sont formées par des orifices ménagés dans la paroi 822. Les buses ou orifices 1102 sont orientés vers l'axe X₈₂.

En pratique, les pressions d'alimentation de la boîte de mélange 102, respectivement en eau et air, sont telles que des bulles d'air de quelques dixièmes de millimètre sont créées dans le flux F₃. Ces bulles sont stables au moins jusqu'à ce que les flux unitaires F'₃ débouchent dans le tronçon 82, en aval de la roue 2.

Le tronçon 82 est une zone de pression relativement basse de l'écoulement d'eau principal F₁, ce qui favorise le mélange entre les flux F₁ et F'₃, notamment car le flux F₁ en sortie de la roue 2 est très turbulent. Ainsi, les éléments 102 à 120 permettent, lorsque cela est nécessaire, d'injecter le flux F₃ de mélange eau-air en aval de la roue 2, c'est-à-dire dans une zone de l'installation 100 où la pression de l'eau est relativement faible, notamment plus faible que dans la conduite forcée 5. Ce flux F₃ de mélange eau-air se combine alors au flux d'eau principal F₁, ce qui permet d'augmenter la teneur en air du flux d'eau sortant de la turbine 1, ce flux étant la somme des flux F₁ et F₃.

Dans ces conditions, le flux d'eau total F₀, prélevé dans la retenue d'eau et s'écoulant dans la conduite forcée 5, se divise en le flux d'eau principal F₁ et le flux d'eau secondaire F₂, alors que le flux total F'₀ en sortie de la turbine est la somme des flux F₁ et F₃.

Lorsque, en tenant compte du signal S₁₂₀, l'unité 120 détermine qu'il n'est pas nécessaire d'augmenter la teneur en oxygène dissout du flux d'eau principal F₁ qui traverse la roue 2, les vannes 114 et 116 sont fermées et les éléments 102 à 116 n'ont pas d'influence sur le fonctionnement de la turbine 1. En particulier, ils ne diminuent pas le rendement global de l'installation 100. Ceci découle, notamment, du fait que les éléments 102 à 116 sont installés à l'extérieur du trajet d'écoulement du flux F₁.

Dans ces conditions, les flux d'eau F₀, F'₀ et F₁ ont le même débit et le flux d'eau secondaire a un débit nul.

On remarque également que, comme ces éléments 102 à 116 sont situés à l'extérieur du trajet du flux F₁, les éléments 2, 3 et 5 à 8 peuvent être des éléments standards, ce qui est avantageux en termes de conception et de maintenance.

Dans le deuxième mode de réalisation de l'invention représentée à la figure 3, les éléments analogues à ceux du premier mode de réalisation portent les mêmes références. Dans ce qui suit, on décrit principalement ce qui distingue ce premier mode de réalisation du précédent.

Le distributeur 110 de ce mode de réalisation comprend également une chambre de répartition 1104 qui alimente différents orifices ou buses 1102 ménagés dans la paroi 822 d'un tronçon 82 du tube d'aspiration. Un déflecteur annulaire 1106 est disposé, à l'intérieur du tronçon 82, au niveau des buses 1102. Ce déflecteur est solidarisé à la paroi 822 au-dessus des buses 1102 et permets de créer, au voisinage de ces buses et sous l'effet du flux d'eau principal F₁, une zone de faible pression, ce qui créé une aspiration des flux unitaires F'₃ du mélange diphasique d'eau et d'air au sein du conduit d'aspiration 8.

La présente invention est susceptible de divers aménagements et modifications.

En particulier, elle peut être mise en oeuvre avec des turbines autres qu'une turbine Francis, notamment avec une turbine de type hélice, bulbe ou Kaplan. L'invention peut également être mise en oeuvre avec une turbine pompe.

A la place d'un distributeur 110 comprenant plusieurs buses ou orifices et une chambre de répartition, d'autres types de distributeurs peuvent être envisagés. Par exemple, les buses peuvent être remplacées par une rainure continue, ou non, sur la périphérie de l'aspirateur ou par une buse d'injection unique.

En variante, le flux d'air F₃ peut être injecté dans une autre partie de la turbine 1, pour autant qu'il s'agit d'une zone de relative basse pression du flux d'eau principal F₁, en aval de la roue de la turbine.

Selon une autre variante, le flux d'eau secondaire F₂ peut être prélevé dans une autre partie du trajet de l'écoulement d'eau principal F₁. Tel peut notamment être le cas au niveau de la bâche 6 ou dans la retenue d'eau.

Selon une autre variante, un gaz autre que de l'air et contenant de l'oxygène peut être amené à la boîte de mélange 102. Ce gaz peut être fourni à partir d'un réservoir dédié, de préférence sous pression, et installé à proximité de la turbine 1.

Selon une autre variante, des pompes et/ou compresseurs peuvent être installés sur les conduits 104 et 106 pour garantir que la boîte de mélange 102 est alimentée, respectivement en eau et en gaz contenant de l'oxygène, sous une pression suffisante.

Les caractéristiques techniques des modes de réalisation et variantes envisagées ci-dessus peuvent être combinées entre elles pour générer de nouveaux modes de réalisation.

## Revendications

1. .Turbine hydraulique (1) comprenant une roue (2) tournant autour d'un axe de rotation sous l'action d'un flux d'eau principal (F₁) allant d'une conduite forcée (5) vers un tube d'aspiration (8), le long d'un trajet d'écoulement (5, 6, 7, 2, 8) passant à travers la roue de la turbine, **caractérisée en ce que** la turbine (1) comprend :
- des premiers moyens (102), disposés à l'extérieur du trajet d'écoulement du flux d'eau principal (F₁) et permettant de mélanger, d'une part, un flux d'eau secondaire (F₂) prélevé sur le trajet d'écoulement, en amont de la roue (2) de la turbine (1), et, d'autre part, un gaz contenant de l'oxygène (A₂) et
- des deuxièmes moyens (110) d'injection, en aval de la roue (2) de la turbine, d'un mélange eau-gaz (F3) réalisé dans les premiers moyens, les deuxièmes moyens comprenant un distributeur (110) équipé de plusieurs buses (1102) disposées sur une paroi (822) du tube d'aspiration (8), orientées vers un axe central (X82) de ce tube et à travers lesquelles le mélange eau-gaz (F₃) débouche dans le conduit d'aspiration (8) et comprenant un déflecteur (1106) disposé dans le tube d'aspiration (8) au niveau des buses (1102) .

2. . Turbine selon la revendication 1, **caractérisée en ce que** les premiers moyens comprennent une boîte de mélange (102) alimentée, d'une part en eau, par un premier conduit (104) raccordé au trajet d'écoulement (5, 6, 7) et, d'autre part en gaz, par un deuxième conduit (106) alimenté en gaz contenant de l'oxygène.

3. . Turbine selon la revendication 2, **caractérisée en ce que** la boîte de mélange (102) comprend un hydro-injecteur à effet Venturi, un système excité par un élément piézo-électrique, un système à vortex cavitaire, un tamis poreux ou une combinaison de ces moyens.

4. . Turbine selon l'une des revendications précédentes, **caractérisée en ce que** les premiers moyens (102) sont prévus pour mélanger le flux d'eau secondaire (F₂) avec de l'air.

5. . Turbine selon les revendications 2 et 4, **caractérisée en ce que** le deuxième conduit (106) est raccordé à l'air libre.

6. . Turbine selon l'une des revendications 2 ou 3, **caractérisée en ce que** le deuxième conduit est raccordé à un réservoir de gaz contenant de l'oxygène, de préférence sous pression.

7. . Turbine selon l'une des revendications précédentes, **caractérisée en ce qu'**elle comprend des moyens (114, 120) de contrôle du débit du flux d'eau secondaire (F₂), entre le trajet d'écoulement (5, 6, 7) et les premiers moyens (102).

8. . Turbine selon les revendications 2 et 7, **caractérisée en ce que** les moyens de contrôle (114, 120) du débit du flux d'eau secondaire (F₂) comprennent au moins une première vanne (114) disposée sur le premier conduit (104).

9. . Turbine selon l'une des revendications précédentes, **caractérisée en ce qu'**elle comprend des moyens (120, 116) de contrôle du débit de gaz (A₂) alimentant les premiers moyens (102).

10. . Turbine selon les revendications 2 et 9, **caractérisée en ce que** les moyens de contrôle (116, 120) du débit de gaz (A₂) comprennent au moins une deuxième vanne (116) disposée sur le deuxième conduit (106).

11. . Turbine selon l'une des revendications 8 ou 10, **caractérisée en ce que** les moyens de contrôle (114, 120) du débit du flux d'eau secondaire (F2) et/ou les moyens de contrôle (116, 120) du débit de gaz (A2) comprennent une unité de commande (120) de la première vanne (114) et/ou de la deuxième vanne (116).

12. . Turbine selon l'une des revendications précédentes, **caractérisée en ce qu'**il comprend plusieurs buses (1102) régulièrement répartis autour de l'axe central (X82) du tube d'aspiration (8).

13. . Turbine selon l'une des revendications précédentes, **caractérisée en ce qu'**il comprend plusieurs buses et **en ce que** le distributeur (110) comprend une chambre (1104) de répartition, entre les buses, du mélange eau-gaz (F₃) provenant des premiers moyens (102), cette chambre étant disposée radialement autour des buses (1102).

14. . Turbine selon l'une des revendications précédentes, **caractérisée en ce que** le distributeur (110) comprend un déflecteur (1106) disposé dans le tube d'aspiration (8), en aval de la ou des buses (1102).

15. . Turbine selon l'une des revendications précédentes, **caractérisé en ce que** le flux d'eau secondaire (F2) est prélevé dans la conduite forcée (5).

16. . Turbine selon l'une des revendications 1 à 14, **caractérisée en ce que** le flux d'eau secondaire (F₂) est prélevé dans une bâche (6) de répartition du flux d'eau principal (F₁).

17. . Turbine selon l'une des revendications 1 à 14, **caractérisée en ce que** le flux d'eau secondaire (F₂) est prélevé dans une retenue d'eau qui alimente la turbine (1).

18. . Turbine selon l'une des revendications précédentes, **caractérisée en ce qu'**elle est de type Francis.

19. . Turbine selon l'une des revendications 1 à 17, **caractérisée en ce qu'**elle est de type hélice, bulbe ou Kaplan.

20. . Installation (100) de conversion d'énergie hydraulique en énergie électrique ou mécanique, **caractérisée en ce qu'**elle comprend une turbine (1) selon l'une des revendications précédentes, une conduite forcée (5) d'alimentation de la turbine avec un flux d'eau principal (F₁) et un tube d'aspiration (8) pour évacuer le flux d'eau principal sortant de la turbine et **en ce que** les premiers moyens (102) sont sélectivement alimentés avec un flux d'eau secondaire (F₂) prélevé sur le trajet d'écoulement, en amont de la roue (2) de la turbine (1), et avec un flux de gaz contenant de l'oxygène (A₂) à la pression atmosphérique.

## Patentansprüche

1. Hydraulikturbine (1), umfassend ein Rad (2), das sich um eine Rotationsachse unter der Wirkung eines Hauptwasserstroms (F₁) dreht, der von einer Druckleitung (5) zu einem Ansaugrohr (8) entlang einer Fließbahn (5, 6, 7, 2, 8) geht, die über das Rad der Turbine verläuft, **dadurch gekennzeichnet, dass** die Turbine (1) umfasst:
- erste Mittel (102), die außerhalb der Fließbahn des Hauptwasserstroms (F₁) angeordnet sind und es ermöglichen, einerseits einen Nebenwasserstrom (F₂), der an der Fließbahn stromaufwärts zu dem Rad (2) der Turbine (1) entnommen wird, und andererseits ein Sauerstoff enthaltendes Gas (A₂) zu mischen, und
- zweite Mittel (110) zum Einspritzen stromabwärts zum Rad (2) der Turbine eines Wasser-Gas-Gemisches (F₃), das in den ersten Mitteln hergestellt wird, wobei die zweiten Mittel einen Verteiler (110) umfassen, der mit mehreren Düsen (1102) ausgestattet ist, die an einer Wand (822) des Ansaugrohrs (8) angeordnet und zu einer Zentralachse (X82) dieses Rohrs ausgerichtet sind, und durch die das Gas-Wasser-Gemisch (F₃) in die Ansaugleitung (8) mündet, und umfassend ein Ablenkblech (1106), das in dem Ansaugrohr (8) im Bereich der Düsen (1102) angeordnet ist.

2. Turbine nach Anspruch 1, **dadurch gekennzeichnet, dass** die ersten Mittel ein Mischgehäuse (102) umfassen, das einerseits mit Wasser durch eine erste Leitung (104), die an die Fließbahn (5, 6, 7) angeschlossen ist, und andererseits mit Gas durch eine zweite Leitung (106), die mit Sauerstoff enthaltendem Gas versorgt wird, versorgt wird.

3. Turbine nach Anspruch 2, **dadurch gekennzeichnet, dass** das Mischgehäuse (102) einen Hydro-Injektor mit Venturi-Effekt, ein durch ein piezoelektrisches Element erregtes System, ein Kavität-Vortex-System, ein poröses Sieb oder eine Kombination dieser Mittel umfasst.

4. Turbine nach einem der vorhergehenden Ansprüche, **dadurch gekennzeichnet, dass** die ersten Mittel (102) dazu vorgesehen sind, den Nebenwasserstrom (F₂) mit Luft zu mischen.

5. Turbine nach den Ansprüchen 2 und 4, **dadurch gekennzeichnet, dass** die zweite Leitung (106) mit dem Freien verbunden ist.

6. Turbine nach einem der Ansprüche 2 oder 3, **dadurch gekennzeichnet, dass** die zweite Leitung an einen Sauerstoff enthaltenden Gasbehälter, vorzugsweise unter Druck, angeschlossen ist.

7. Turbine nach einem der vorhergehenden Ansprüche, **dadurch gekennzeichnet, dass** sie Mittel (114, 120) zur Kontrolle der Menge des Nebenwasserstroms (F₂) zwischen der Fließbahn (5, 6, 7) und den ersten Mitteln (102) umfasst.

8. Turbine nach den Ansprüchen 2 und 7, **dadurch gekennzeichnet, dass** die Mittel (114, 120) zur Kontrolle der Menge des Nebenwasserstroms (F₂) mindestens ein erstes Ventil (114) umfassen, das auf der ersten Leitung (104) angeordnet ist.

9. Turbine nach einem der vorhergehenden Ansprüche, **dadurch gekennzeichnet, dass** sie Mittel (120, 116) zur Kontrolle der Gasmenge (A₂), die die ersten Mittel (102) versorgt, umfasst.

10. Turbine nach den Ansprüchen 2 und 9, **dadurch gekennzeichnet, dass** die Mittel (116, 120) zur Kontrolle der Gasmenge (A₂) mindestens ein zweites Ventil (116) umfassen, das auf der zweiten Leitung (106) angeordnet ist.

11. Turbine nach einem der Ansprüche 8 oder 10, **dadurch gekennzeichnet, dass** die Mittel (114, 120) zur Kontrolle der Menge des Nebenwasserstroms (F₂) und/oder die Mittel (116, 120) zur Kontrolle der Gasmenge (A₂) eine Einheit (120) zur Steuerung des ersten Ventils (114) und/oder des zweiten Ventils (116) umfassen.

12. Turbine nach einem der vorhergehenden Ansprüche, **dadurch gekennzeichnet, dass** sie mehrere Düsen (1102) umfasst die regelmäßig um die Zentralachse (X82) des Ansaugrohrs (8) verteilt sind.

13. Turbine nach einem der vorhergehenden Ansprüche, **dadurch gekennzeichnet, dass** sie mehrere Düsen umfasst, und dass der Verteiler (110) eine Kammer (1104) zur Verteilung des von den ersten Mitteln (102) kommenden Wasser-Gas-Gemisches (F₃) zwischen den Düsen umfasst, wobei diese Kammer radial um die Düsen (1102) angeordnet ist.

14. Turbine nach einem der vorhergehenden Ansprüche, **dadurch gekennzeichnet, dass** der Verteiler (110) ein Ablenkblech (1106) umfasst, das in dem Ansaugrohr (8) stromabwärts zu der oder den Düsen (1102) angeordnet ist.

15. Turbine nach einem der vorhergehenden Ansprüche, **dadurch gekennzeichnet, dass** der Nebenwasserstrom (F₂) an der Druckleitung (5) entnommen wird.

16. Turbine nach einem der Ansprüche 1 bis 14, **dadurch gekennzeichnet, dass** der Nebenwasserstrom (F₂) an einem Verteilungsbehälter (6) des Hauptwasserstroms (F₁) entnommen wird.

17. Turbine nach einem der Ansprüche 1 bis 14, **dadurch gekennzeichnet, dass** der Nebenwasserstrom (F₂) an einem Wasserbecken, das die Turbine (1) versorgt, entnommen wird.

18. Turbine nach einem der vorhergehenden Ansprüche, **dadurch gekennzeichnet, dass** sie vom Typ Francis-Turbine ist.

19. Turbine nach einem der Ansprüche 1 bis 17, **dadurch gekennzeichnet, dass** sie vom Typ Propeller-, Rohr- oder Kaplan-Turbine ist.

20. Anlage (100) zur Umwandlung von hydraulischer Energie in elektrische oder mechanische Energie, **dadurch gekennzeichnet, dass** sie eine Turbine (1) nach einem der vorhergehenden Ansprüche, eine Druckleitung (5) zur Versorgung der Turbine mit einem Hauptwasserstrom (F₁) und ein Ansaugrohr (8) zum Ableiten des aus der Turbine austretenden Hauptwasserstroms umfasst, und dass die ersten Mittel (102) selektiv mit einem Nebenwasserstrom (F₂), der an der Fließbahn entnommen wird, stromaufwärts zu dem Rad (2) der Turbine (1) und mit einem Gasstrom, der Sauerstoff (A₂) unter Luftdruck enthält, versorgt werden.

## Claims

1. Hydraulic turbine (1) comprising a wheel (2) rotating about an axis of rotation under the action of a main water stream (F₁) from a penstock (5) to a suction tube (8), along a flow path (5, 6, 7, 2, 8) passing through the turbine wheel, **characterised in that** the turbine (1) comprises:
- first means (102) arranged outside the flow path of the main water stream (F₁) and for mixing, on the one hand, a secondary water stream (F₂) taken from the flow path and located upstream from the wheel (2) of the turbine (1), and, secondly, an oxygen-containing gas (A₂); and
- second means (110) for injecting, downstream from the wheel (2) of the turbine, a gas/water mixture (F₃) produced in the first means, the second means comprising a dispenser (110) equipped with several nozzles (1102) arranged on a wall (822) of the suction tube (8), oriented towards a central axis (X82) of this tube and through which the water/gas mixture (F₃) opens into the suction tube (8) and comprising a deflector (1106) arranged in the suction tube (8) at the nozzles (1102)

2. Turbine according to claim 1, **characterised in that** the first means comprise a mixing bowl (102) supplied, firstly, with water, by a first conduit (104) connected to the flow path (5, 6, 7) and, secondly, with gas, by a second conduit (106) supplied with an oxygen-containing gas.

3. Turbine according to claim 2, **characterised in that** the mixing bowl (102) comprises a Venturi hydro-injector, a system energised by a piezoelectric element, a cavity vortex system, a porous screen or a combination of these means.

4. Turbine according to any one of the preceding claims, **characterised in that** the first means (102) are provided for mixing the secondary water stream (F₂) with air.

5. Turbine according to claims 2 and 4, **characterised in that** the second conduit (106) is connected to the open air.

6. Turbine according to any one of claims 2 or 3, **characterised in that** the second conduit is connected to a gas tank containing oxygen, preferably pressurised.

7. Turbine according to any one of the preceding claims, **characterised in that** it comprises means (114, 120) for controlling the flow of the secondary water stream (F₂) between the flow path (5, 6, 7) and the first means (102).

8. Turbine according to claims 2 and 7, **characterised in that** the means (114, 120) for controlling the flow of the secondary water stream (F₂) comprise at least a first valve (114) arranged on the first conduit (104).

9. Turbine according to any one of the preceding claims, **characterised in that** it comprises means (120, 116) for controlling the gas stream (A₂) supplying the first means (102).

10. Turbine according to claims 2 and 9, **characterized in that** that the means for controlling (116, 120) the gas stream (A₂) comprise at least one second valve (116) arranged on the second conduit (106)

11. Turbine according to any one of claims 8 or 10, **characterised in that** the means for controlling (114, 120) the flow of the secondary water stream (F₂) and/or the means for controlling (116, 120) the gas stream (A₂) comprise a control unit (120) of the first valve (114) and/or the second valve (116).

12. Turbine according to any one of the preceding claims, **characterised in that** it comprises several nozzles (1102) evenly distributed around the central axis (X82) of the suction tube (8).

13. Turbine according to any one of the preceding claims, **characterised in that** it comprises a plurality of nozzles and **in that** the dispenser (110) comprises a chamber (1104) for distributing, between the nozzles, the water/gas mixture (F₃) coming from the first means (102), this chamber being arranged radially around the nozzles (1102)

14. Turbine according to any one of the preceding claims, **characterised in that** the dispenser (110) comprises a deflector (1106) arranged in the suction tube (8) downstream of the nozzle or nozzles (1102).

15. Turbine according to any one of the preceding claims, **characterised in that** the secondary water stream (F₂) is taken from the penstock (5).

16. Turbine according to any one of claims 1 to 14, **characterized in that** the secondary water stream (F₂) is taken from a tank (6) for distributing the main water stream (F₁).

17. Turbine according to any one of claims 1 to 14, **characterised in that** the secondary water stream (F₂) is taken from a water tank which supplies the turbine (1).

18. Turbine according to any one of the preceding claims, **characterised in that** it is of the Francis type.

19. Turbine according to any one of claims 1 to 17, **characterised in that** it is of the propeller, bulb or Kaplan type.

20. Installation (100) for converting hydraulic energy into electrical or mechanical energy, **characterised in that** it comprises a turbine (1) according to any one of the preceding claims, a penstock (5) for supplying the turbine with a main water stream (F₁) and a suction tube (8) for evacuating the main water stream exiting the turbine and **in that** the first means (102) are selectively supplied with a secondary water stream (F₂) taken from the flow path, upstream from the wheel (2) of the turbine (1), and with an oxygen-containing gas (A₂) at atmospheric pressure.
